# EUROPÄISCHE PATENTSCHRIFT

(11) **EP 0 794 863 B1**
(45) Veröffentlichungstag und Bekanntmachung des Hinweises auf die Patenterteilung: **01.07.1998**
(21) Anmeldenummer: 95941061.4
(22) Anmeldetag: 30.11.1995
(51) Int. Cl.: B32B 27/06, F16L 55/168, C09K 3/10

(54) **DICHTUNGSBAND ZUM ABDICHTEN VON ROHRVERBINDUNGEN**
SEALING STRIP FOR SEALING PIPE CONNECTIONS
RUBAN D'ETANCHEITE POUR RACCORDS DE TUYAUX

(30) Priorität: 01.12.1994 DE 4442798
(43) Veröffentlichungstag der Anmeldung: 17.09.1997
(73) Patentinhaber: Akzo Nobel N.V., 6824 BM Arnhem (NL)
(72) Erfinder: MADEREK, Eugeniusz, D-42281 Wuppertal (DE)
(74) Vertreter: Fett, Günter
(86) Internationale Anmeldenummer: EP9504720
(87) Internationale Veröffentlichungsnummer: WO9616800

(56) Entgegenhaltungen:
- DE-C- 4 015 394
- FR-A- 2 544 456
- US-A- 3 614 967
- US-A- 5 096 206

## Beschreibung

Die Erfindung betrifft ein Dichtungsband, welches zum Umwickeln von Rohrenden, vorzugsweise von Rohrgewinden, und Abdichten von Gewindeverbindungen, Verschraubungen und Rohrverbindungen geeignet ist, das eine wasserdichte Funktionsschicht, vorzugsweise mit einer oder mehreren Grundschichten, aufweist, und die Verwendung desselben.

Es ist bekannt, daß Rohrleitungen mittels Rohrverbindungen wie Rohrschraubverbindungen oder Rohrsteckverbindungen miteinander verbunden werden. Als Rohrschraubverbindungen werden vorwiegend Gewinderohre oder sogenannte Fittings verwendet, die Richtungsänderungen des Rohrleitungsverlaufs, Verzweigungen oder den Verschluß von Gewinderohren oder Rohrleitungen ermöglichen. Diese Formteile können wie die Rohrleitungen aus verschiedenen Materialien hergestellt und als T-Stücke, Bogenwinkel, Kreuzstücke, Muffen, Reduktionsmuffen oder Reduktionsnippel ausgebildet sein. Das Ende der Rohrleitung oder des Rohrstückes ist z.B. als kegelige Außengewinde ausgestaltet und das Ende des Rohrschraubverbindungsstücks mit einem zylindrischen Innengewinde versehen.

Damit die Rohrschraubverbindungen mit den Rohrleitungen fest und dicht sind, müssen die Gewindeflanken von dem Rohrende und von der Rohrschraubverbindung fest aufeinander mittels einer bestimmten Einschraublänge gepreßt werden. Daher ist es erforderlich, üblicherweise das Außengewinde des Rohrendes mit einem Hanfbündel zu umwickeln, wobei das Hanfbündel vom Gewindeauslauf aus axial über die Gewindeschraublänge gelegt und dann vom Gewindeanfang in Rechtsdrehsinn auf das Gewinde gewickelt wird. Dabei muß man, damit der Hanf sich nicht wieder abrollt und beim Eindrehen des Rohrverbindungsstücks gleitfähig ist, diesen mit einem pastösen Dichtmittel beschichten, was zeitaufwendig ist und ein akkurates Arbeiten erfordert.

Nach Aufschrauben des Rohrschraubverbindungsstücks auf das Rohrende wird der überstehende Hanf mit einer Handbügelsäge entfernt, dabei besteht jedoch die Gefahr, daß sowohl der Benutzer sich aufgrund der nunmehr durch das pastöse Dichtmittel hervorgerufenen glatten Oberfläche mittels der Handbügelsäge Verletzungen zufügen kann als auch der Hanf aus den Gewindegängen mittels des Sägeblatts herausgezogen wird.

Überdies unterliegt der Hanf als Naturprodukt einem Alterungsprozeß, der sich durch Austrocknung und Verrottung bemerkbar macht. Der Alterungsprozeß kann zwar mittels des auf den Hanf aufgetragenen Dichtmittels verzögert, jedoch nicht vollkommen vermieden werden, so daß die Gefahr besteht, daß Rohrverschraubungen im Laufe der Zeit undicht werden und somit einer ständigen Kontrolle bedürfen.

Ebenso vermittelt Hanf dem Benutzer keinen angenehmen Griff, sondern fühlt sich rauh und kratzig an. Zudem ist zu beobachten, daß der Hautkontakt mit Hanf oft zu Irritationen und sogar zu Allergien führen kann.

Um die o. g. Nachteile zu beseitigen, schlägt die DE-PS 40 15 394 ein Dichtband vor, welches zum Abdichten von Gewinden in der Rohrinstallation geeignet erscheint, wobei kleine Hanffasern oder hanfähnliche Kunstfasern auf eine Polytetrafluorethylen-Folie geklebt oder in die Folie eingelassen sind. Dieses Dichtband verzögert zwar die bei Hanf aufgetretene Austrocknung, jedoch ist festzustellen, daß, falls die Polytetra-fluorethylen-Folie durch ein Auf-, Aus- oder Mitdrehen des Rohrendes in die Rohrschraubverbindungen beschädigt wird, die Gefahr besteht, daß die Hanffasern, wenn auch nunmehr verzögert, weiterhin an Feuchtigkeit verlieren und die Inhaltsstoffe der Rohrleitungen wie Wasser oder Gas aufgrund der entstehenden Sprödigkeit des Dichtbands nach außen dringen. Dieser Prozeß wird noch verstärkt, wenn das Rohrleitungssystem starken Temperaturwechseln oder dauernd mittleren oder hohen Temperaturen ausgesetzt wird.

Zudem darf nicht übersehen werden, daß das mit Polytetrafluorethylen beschichtete Dichtband zwar thermisch stabil ist, jedoch aufgrund des Vorhandenseins von Hanffasern in dem Dichtband seine Wärmestabilität beeinträchtigt wird und keinen dauerhaften Verschluß gewährleistet.

Auch das aus Polytetrafluorethylen bestehende Dichtband erfordert ein zeitraubendes mehrmaliges Umwickeln des Außengewindes des Rohrstücks, um eine Dichtigkeit der Rohrschraubverbindung einigermaßen zu ermöglichen. Dabei ist festzustellen, daß bereits ein geringes Zurückdrehen des Rohrschraubverbindungsstücks zur Undichtigkeit führt; das Zurückdrehen des Rohrschraubverbindungsstücks aus dem Rohrstück zwecks Korrektur der Position von Rohrschraubverbindungsstück und Rohrstück zueinander ist ein in der täglichen Praxis z.B. des Heizungsmonteurs häufig erforderlicher Umstand, der das Anpassen von Winkelrohren der Heizungsanlage in einem Gebäude an die Beschaffenheit des Mauerwerks erst ermöglicht.

Überdies übersieht dieser Stand der Technik völlig die Gefahr, daß bei Hausbränden und beim Wiederaufarbeiten von Rohrleitungen bzw. Rohrschraubverbindungen fluorhaltige Zersetzungsprodukte, wie Fluorphosgen, Carbonylfluorid, Tetrafluorkohlenstoff, HF, Hexafluorethan, Trifluoracetylfluorid und Perfluorisobuten entstehen, die z.T. äußerst toxisch sind. Diese Zersetzungsprodukte führen bei Menschen bei längerer Einwirkung zu sogenanntem Polymerdampf-Fieber und zu Lungenödemen. Darüber hinaus erschweren die fluorhaltigen Zersetzungsprodukte die Arbeiten des Löschpersonals bei Hausbränden.

Aufgabe der vorliegenden Erfindung ist es, ein Dichtungsband bereitzustellen, welches die o.g. Nachteile nicht aufweist. Darüber hinaus ist es erwünscht, wenn das Dichtungsband nicht nur eine ausreichende Dichtheit und Festigkeit bei Auf- und Abschrauben des Rohrschraubverbindungsstücks aus dem Innengewinde des Rohrstücks aufweist sondern es auch durch die Inhaltsstoffe der Rohrleitung wie Trinkwasser oder Heißwasser nicht ausgelaugt wird. Überdies sollte das Dichtungsband leicht verarbeitbar und handhabbar sein.

Die Aufgabe wird gelöst durch ein Dichtungsband, geeignet zum Umwickeln von Rohrenden, vorzugsweise von Rohrgewinden, und Abdichten von Gewindeverbindungen, Verschraubungen und Rohrverbindungen, das eine wasserdichte Funktionsschicht, vorzugsweise mit einer oder mehreren Grundschichten, aufweist, welches dadurch gekennzeichnet ist, daß die Funktionsschicht Polymere auf Polyetherestergrundlage, Polyetheramidgrundlage und / oder Polyurethangrundlage enthält. Unter Rohrverbindungen sind Rohrschraubverbindungen und Rohrsteckverbindungen zu verstehen.

Ein weiterer Gegenstand der Erfindung betrifft die Verwendung des erfindungsgemäßen Dichtungsbands bei Rohrschraubverbindungen zum Umwickeln von Rohrgewinden für Gewinderohre und zum Abdichten der Rohrschraubverbindungen und bei Rohrsteckverbindungen zum Umwickeln von Rohrenden und zum Abdichten der Rohrsteckverbindungen.

Es zeigt sich, daß das erfindungsgemäße Dichtungsband rasch und unkompliziert auf ein Außengewinde eines Rohrendes aufgewickelt werden kann, ohne daß wie bei Hanf auf eine genau axiale Verlegung in die Rillen des Gewindes geachtet werden muß. Vorzugsweise wickelt man das erfindungsgemäße Dichtungsband derart auf das Außengewinde, daß die Funktionsschicht dem Außengewinde zugewandt ist. Aufgrund der guten Anschmiegsamkeit des erfindungsgemäßen Dichtungsbands auf Rohrenden aus Eisen-Gußwerkstoffen ist das notwendige Aufrauen des Gewindes mit einer Drahtbürste im Gegensatz zur Hanfverlegung nicht mehr erforderlich. Die gute Haftung verhindert ein Mit- oder Ausdrehen des Dichtungsbands beim Zu- oder Aufschrauben der Rohrenden in die Rohrschraubverbindungen bzw. ein Abziehen des Dichtungsbands beim Hinein- oder Herausziehen des Rohrendes in bzw. aus der Rohrsteckverbindung.

Im Gegensatz zu herkömmlichen Dichtungsmaterialien wie Hanf oder Flachs erweist sich das erfindungsgemäße Dichtungsband gegenüber den in den Rohrleitungen befindlichen flüssigen oder gasförmigen Inhaltsstoffen wie Brauchwasser, Heiß-, Trinkwasser, Methan oder Stadtgas, weitgehend chemisch inert, so daß das erfindungsgemäße Dichtungsband nur einem sehr geringen Alterungsprozeß unterliegt und die Gefahr des Eindringens mit anschließendem Durchdringen von Inhaltsstoffen durch das erfindungsgemäße Dichtungsband, wie es bei den mit Hanffasern beschichteten Polytetrafluorethylen-Dichtbändern zu beobachten ist, nicht zu befürchten ist.

In einer bevorzugten Ausführungsform des Erfindungsgegenstands kann mindestens eine Grundschicht, welche vorzugsweise porös ist, auf mindestens einer Seite der Funktionsschicht angeordnet sein. Dabei erweist es sich von Vorteil, wenn die Grundschicht ein Vlies, Filz, Wirkware und / oder Gewebe ist. Insbesondere bei einer derartigen Verwendung des erfindungsgemäßen Dichtungsbands, daß die Funktionsschicht dem Außengewinde zugewandt ist, ist eine besonders gute Haftung auf der Oberfläche des Außengewindes festzustellen. Zudem ist auch das bisherige Einbürsten von Hanf oder Flachsbündeln in die Gewindegänge nicht erforderlich, was zu einer Erleichterung der Handhabbarkeit und eine Verkürzung des Zeitaufwands führt. Zu den o.g. für den Fachmann als überraschend anzusehenden Vorteilen gesellt sich zudem der Nutzen, daß bereits eine einmalige Umwicklung des Außengewindes der Rohrleitung mit dem erfindungsgemäßen Dichtungsband ausreicht, um eine Dichtigkeit zu gewährleisten. Auch dieser Umstand trägt zu der gewünschten schnelleren und erleichterten Verarbeitbarkeit des erfindungsgemäßen Dichtungsbands bei.

In einer weiteren Ausgestaltung des Erfindungsgegenstands kann das Vlies, Filz, Wirkware und / oder Gewebe Naturfasern und / oder Chemiefasern enthalten, wobei die Naturfasern Baumwolle, Leinen, Jute, Hanf und / oder Sisal aufweisen. Bei Verwendung der Funktionsschicht mit Polymeren auf Polyetherestergrundlage, Polyurethangrundlage und / oder Polyetheramidgrundlage kann das bei den herkömmlichen mit Polytetrafluorethylen versehenen Dichtbändern zu beobachtende Austrocknen der organischen Naturfasern nicht festgestellt werden. Die Chemiefasern können synthetische Fasern und/ oder regenerierte und / oder modifizierte Cellulose-Fasern sein, wobei als synthetische Fasern ein oder mehrere Vertreter der Polyester-, Polyamid-, Polyacryl-, Polyvinylchloridfasern und Mischungen derselben umfassenden Gruppe ausgewählt sind.

Ein Vlies mit einem Flächengewicht von 20 bis 200 g / m2, vorzugsweise 50 bis 100 g / m2, ist vorteilhaft. Die Funktionsschicht kann mit der Grundschicht punkt-, gitter- und / oder streifenförmig verklebt sein. In einer besonderen Ausführungsform des erfindungsgemäßen Dichtungsbands kann die Schichtdicke der Funktionsschicht derart bemessen sein, daß unter Druckbelastung die Funktionsschicht von den Zwischenräumen des Vlieses, Filzes, der Wirkware und/oder des Gewebes nicht vollständig aufgenommen ist.

Die bei den herkömmlichen mit Naturfasern beschichteten bzw. versehenen Polytetrafluorethylen-Dichtungsbändern auftretende Undichtigkeit, wenn bereits bei geringem Zurückdrehen der Rohrverbindungen ein starkes Beschädigen der Folie und innere Verschiebungen der aufgewickelten Dichtungsmittelträgerbandschichten zu finden sind, ist bei der Verwendung des erfindungsgemäßen Dichtungsbands nicht zu beobachten. Die beim Verschrauben des Rohrendes ins Fitting entstehenden Druck- und Scherbeanspruchungen führen zwar zu Formveränderungen, jedoch bleibt die Dichtigkeit der Rohschraubverbindungen im wesentlichen erhalten, ein Umstand, der aufgrund der oben aufgezeigten vielfältigen Nachteile des Stands der Technik sonach für den Fachmann unerwartet anzusehen ist.

Dabei ist es vorteilhaft, wenn die Funktionsschicht im unbelasteten Zustand eine Schichtdicke von 5 bis 200 µm, vorzugsweise 10 bis 100 µm, aufweist. Von besonderem Vorteil sind erfindungsgemäße Dichtungsbänder im unbelasteten Zustand mit einer Schichtdicke der Funktionsschicht von 10, 15 oder 20 µm.

In einer weiteren Ausgestaltung des Erfindungsgegenstands können die Polymere der Funktionsschicht Copolyetherester sind, die sich von längerkettigen Polyglykolen, kurzkettigen Glykolen mit 2 bis 4 Kohlenstoffatomen und Dicarbonsäuren ableiten. Vorzugsweise sind die Polymere Copolyetherester, die aus einer Vielzahl von wiederkehrenden intralinearen langkettigen und kurzkettigen Estereinheiten bestehen, die statistisch über Esterbindungen Kopf an Schwanz verknüpft sind, wobei die langkettigen Estereinheiten der Formel 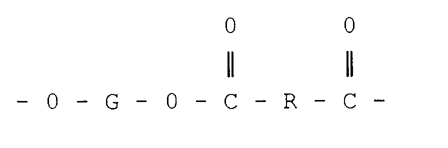 und die kurzkettigen Estereinheiten der Formel 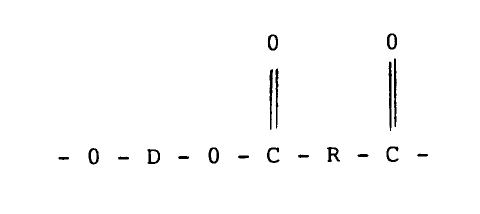 entsprechen, worin G einen zweiwertigen Rest darstellt, der nach der Entfernung von endständigen Hydroxylgruppen aus mindestens einem langkettigen Glykol eines mittleren Molekulargewichts von 600 bis 6 000 und eines Atomverhältnisses von Kohlenstoff zu Sauerstoff zwischen 2,0 und 4,3 zurückbleibt, wobei mindestens 20 Gew.% des langkettigen Glykols ein Atomverhältnis von Kohlenstoff zu Sauerstoff zwischen 2,0 und 2,4 besitzen und 15 bis 50 Gew.% des Copolyetheresters ausmachen, R einen zweiwertigen Rest darstellt, der nach der Entfernung von Carboxylgruppen aus mindestens einer Dicarbonsäure eines Molekulargewichts von weniger als 300 zurückbleibt, und D einen zweiwertigen Rest darstellt, der nach der Entfernung von Hydroxylgruppen aus mindestens einem Diol eines Molekulargewichts von weniger als 250 zurückbleibt, wobei mindestens 80 Mol % der verwendeten Dicarbonsäure aus Terephthalsäure oder ihren esterbildenden Äquivalenten und zumindest 80 Mol % des Diols mit dem kleinen Molekulargewicht aus 1,4-Butandiol oder dessen esterbildenden Äquivalenten bestehen, die Summe der Molprozente der Dicarbonsäure, die keine Terephthalsäure oder deren esterbildenden Äquivalente darstellt, und des Diols mit einem kleinen Molekulargewicht, das kein 1,4-Butandiol oder dessen esterbildenden Äquivalente darstellt, höchstens 20% beträgt und die kurzkettigen Estereinheiten 40 - 80 Gew.% des Copolyetheresters betragen.

Darüber hinaus kann das erfindungsgemäße Dichtungsband Polymere als ganz oder teilweise Copolyetherester enthalten, worin mindestens 70 Mol % der verwendeten Dicarbonsäure 2,6-Naphthalindicarbonsäure oder deren Ester bildenden Äquivalente sind und bei dem mindestens 70 Mol.% des verwendeten Diols mit einem kleinen Molekulargewicht 1,4-Butandiol oder dessen esterbildenden Äquivalente ist und die Summe der Molprozente der Dicarbonsäure, die keine 2,6-Naphthalindicarbonsäure oder deren Ester bildende Äquivalente ist und des Diols mit einem kleinen Molekulargewicht, das kein 1,4-Butandiol oder dessen Ester bildende Äquivalente ist, höchstens 30% beträgt und die Estereinheiten mit kurzen Ketten 35 bis 80 Gew.% des Copolyetheresters ausmachen. Bevorzugt ist es, wenn die Polymere Copolyetherester sind, worin die aus einer Vielzahl von wiederkehrenden intralinearen langkettigen und kurzkettigen Estereinheiten bestehen, die statistisch über Esterbindungen Kopf an Schwanz verknüpft sind, wobei die langkettigen Estereinheiten der Formel 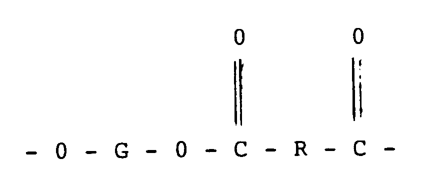 und die kurzkettigen Estereinheiten der Formel 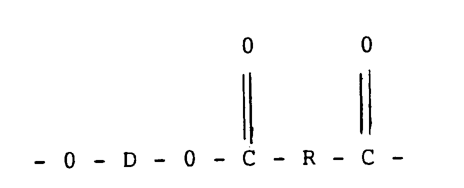 entsprechen, wobei G einen zweiwertigen Rest darstellt, der nach der Entfernung von endständigen Hydroxylgruppen aus mindestens einem langkettigen Glykol eines mittleren Molekulargewichts von 600 bis 4 000 und eines Atomverhältnisses von Kohlenstoff zu Sauerstoff zwischen 2 und 4,3 zurückbleibt, wobei mindestens 20 Gew.% des langkettigen Glykols ein Atomverhältnis von Kohlenstoff zu Sauerstoff zwischen 2,0 und 2,4 besitzen und 15 bis 50 Gew.% des Copolyetheresters ausmachen, R einen zweiwertigen Rest darstellt, der nach der Entfernung von Carboxylgruppen aus mindestens einer Dicarbonsäure eines Molekulargewichts von weniger als 300 zurückbleibt und D einen zweiwertigen Rest darstellt, der nach der Entfernung von Hydroxylgruppen aus mindestens einem Diol eines Molekulargewichts von weniger als 250 zurückbleibt, wobei mindestens 70 Mol % der verwendeten Dicarbonsäure aus 2,6-Naphthalindicarbonsäure oder ihrer esterbildenden Äquivalente besteht und mindestens 70 Mol % des Diols mit dem kleinen Molekulargewicht aus 1,4 Butandiol oder dessen esterbildenden Äquivalenten besteht und die Summe der Mol % von der Dicarbonsäure, die keine 2,6-Naphthalindicarbonsäure oder ihrer esterbildenden Äquivalente ist und des Diols mit einem kleinen Molekulargewicht, das kein 1,4-Butandiol oder dessen esterbildende Äquivalente ist, höchstens 30 % beträgt und die Estereinheiten mit kurzen Ketten 35 bis 80 Gew.% des Copolyetheresters betragen.

Die Verwendung dieser Polymere ermöglicht, daß das erfindungsgemäße Dichtungsband nicht nur chemisch inert gegenüber den Inhaltsstoffen der Rohrleitungssysteme ist, wie Wasser, Warm-, und Brauchwasser, Stadtgas, etc., sondern daß auch in keiner Weise bei Wiederaufarbeiten bzw. bei Einschmelzen der Rohrleitungen halogenhaltige Zersetzungsprodukte gebildet werden.

Das erfindungsgemäße Dichtungsband zeigt auch einen nur sehr geringen Gewichtsverlust, der weniger als 0,2 % beträgt, wenn das Dichtungsband 24 Stunden lang einer Temperatur von 100 °C ausgesetzt wird. Auch die mit dem erfindungsgemäßen Dichtungsband versehenen Dichtungen von Rohrenden des Rohrelements mit den Rohrschraubverbindungen zeigen eine hohe Beständigkeit gegenüber Vibrationen, wobei die mit dem Rohrelement gekoppelten Rohrschraubverbindungen an eine Masse von 5 kg federnd aufgehängt und über eine drehbare Klaue mit einer Drehzahl von 700 Umdrehungen x min-1 insgesamt (20.000 +/ - 500) mal gedreht werden.

Die ausgeglichenen Dichtungseigenschaften des erfindungsgemäßen Dichtungsbands wie hohe Festigkeit gegenüber Temperaturschwankungen und ausreichende Formstabilität gegenüber den Druck- und Scherbeanspruchungen durch Verschrauben des Rohrelements mit seinem Rohrende in die Rohrschraubverbindung gewährleisten den langjährigen Einsatz des erfindungsgemäßen Dichtungsbands in den Rohrschraubverbindungen als auch in Rohrsteckverbindungen, ohne daß dadurch eine dauerhafte Kontrolle wegen möglicherweise auftretenden Undichtigkeiten und Austrocknungen erforderlich gemacht wird. Gleichfalls verbindet gegenüber dem Stand der Technik das erfindungsgemäße Dichtungsband die hervorragenden Eigenschaften wie gute und rasche Handhabbarkeit und erleichterte Verarbeitbarkeit, wie rasches und leichtes Abreißen eines Bandstücks von einer Rolle mit dem erfindungsgemäßen Dichtungsband, mit den Vorzügen der unbedenklichen Entsorgung der mit dem erfindungsgemäßen Dichtungsband versehenen Rohrschraubverbindungen.

Zudem vermittelt das erfindungsgemäße Dichtungsband dem Benutzer einen angenehmen Griff und fühlt sich weich und samtig an, wobei darüber hinaus bei der Handhabung Hautirritationen oder gar Allergien nicht beobachtet werden können.

Vorzugsweise kann das erfindungsgemäße Dichtungsband zumindest eine Grundschicht mit einem Haftmittel enthalten, wobei einem die Haftung fördernden und / oder die Haftung verleihenden Mittel z.B. Mineralöle oder Esteröle der Vorzug gegeben wird. Unter Haftmittel sind auch Klebmittel oder die Adhäsion verleihenden und / oder fördernden Mittel zu verstehen.

Von Vorteil zeigt sich ein pastöses Dichtmittel als das die Haftung fördernde Mittel, welches z.B. Derivate von Harzen mit Polyacrylaten, Mineralöle und / oder Esteröle enthalten kann. Ebenso kann das Dichtmittel Silicone, Polysulfide und/oder Fluate aufweisen.

Im Falle der Verwendung eines Vlieses, Filzes, Wirkware und/oder Gewebes als Grundschicht des erfindungsgemäßen Dichtungsbands zeigt sich, daß die Reißdehnung der Grundschicht (DIN 53 857) sowohl längs als auch quer mindestens 10 % betragen soll und die Fasern in Längsrichtung des Dichtungsbands orientiert sein sollen. Auch ist es möglich, daß die Grundschicht auf beiden Seiten der Funktionsschicht angeordnet wird, dergestalt, daß die Funktionschicht in eine als Schlauch ausgebildete Grundschicht eingelegt wird.

Ein weiterer Vorteil, den die Erfindung bringt, ist die gute Korrigierbarkeit, d.h. man kann ein Formstück z.B. einen Winkel, der zu weit eingedreht wurde und ein Stück zurückgedreht werden muß, ohne weiteres zurückdrehen, ohne daß es dabei zu den bekannten Nachteilen kommt. Bei Polytetrafluorethylenverpackungen ist nach einer Korrektur die Verpackung meistens nicht mehr dicht, so daß man das Formstück ausbauen muß und erneut abdichten und eindrehen muß.

Der Einsatz von Pasten, welcher bei der Verwendung von Hanf nötig ist, kann bei dem erfindungsgemäßen Dichtungsband entfallen. Dadurch läßt sich das Abdichten erheblich schneller durchführen als mit handelsüblichen Hanfpackungen.

Die Entsorgung ist umweltfreundlich, da u.a. bei der Verbrennung keine fluorhaltigen Gase entstehen.

Die Funktionsschicht kann anders, als das bei Dichtungsmitteln auf Basis von Polytetrafluorethylen der Fall ist, dicker gestaltet werden, z.B. in der Größenordnung von 300 - 400 µm, beispielsweise 350 µm. Es kann somit ein höheres Flächengewicht erreicht werden, wie etwa 80 g/m².

Mit den erfindungsgemäßen Dichtungsbändern läßt sich eine hervorragende Gewindestabilität erreichen, so daß das Gewinde nicht wackelt. Dies ist vor allem von Bedeutung, wenn z.B. aus räumlichen Gründen nur eine verkürzte Gewindestrecke ausgenutzt werden kann.

Vorteilhaft ist, wenn das Dichtungsband mindestens auf einer Seite ein Haftmittel aufweist, das vollflächig, teilflächig, punktförmig, streifenförmig oder musterförmig aufgebracht sein kann. Das Haftmittel kann entsprechend auch auf beiden Seiten des Dichtungsbands aufgebracht sein. Vorzugsweise ist der Kleber auf einer als Oberfläche des Bandes vorhandenen Funktionsschicht aufgebracht.

Das Haftmittel ist vorzugsweise auf Basis eines Polymers mit hohem Molekulargewicht, insbesondere Polyacrylaten, aufgebaut. Falls ein Dichtmittel in einer oder mehreren Grundschichten eingebracht werden soll, geschieht das am besten vor dem Aufbringen des Haftmittels.

Das aufgebrachte Haftmittel verhindert vor allem das Rückspringen beim Wickeln des Bandes auf dem Gewinde.

Die Grundschicht enthält, insbesondere, wenn sie als Vlies ausgebildet ist, in vorteilhafter Weise Mikrofasern. Mikrofasern sind hochfeine Fasern mit Titern in der Größenordnung von 0,1 bis 0,01 tex (s. auch "Textile Faserstoffe" von Wolfgang Bobeth, Springer Verlag Berlin 1993).

Das Anwendungsspektrum der Dichtungsbänder ist sehr breit, es läßt sich außer bei den bereits weiter oben erwähnten Anwendungsgebieten auch u.a. bei Fittings, Armaturen, Rohrleitungen und dgl. für technische Gase wie Flüssiggase, z.B. Propan oder Butan oder bei Fittings, Armaturen, Rohrleitungen u.dgl. für Heizöl verwenden.

### Ausführungsbeispiele

Ein Dichtungsband, wobei für die Funktionsschicht Polymere als Copolyetherester, die sich von längerkettigen Polyglykolen, kurzkettigen Glykolen mit 2 bis 4 Kohlenstoffatomen und Dicarbonsäuren ableiten, und für die Grundschicht ein aus Polyester-Fasern aufgebautes Vlies verwendet werden, wird mit der Funktionsschicht als Unterseite auf ein Rohrende eines Rohrelements mit kegeligem Außengewinde, i.e. Whitworth-Rohrgewinde, vom Gewindeauslauf aus axial über die Gewindeschraublänge gelegt und vom Gewindeanfang in Rechtsdrehsinn auf das Gewinde weitgehend ohne Überlappung gewickelt. Der Rechtsdrehsinn gilt bei Rechtsgewinden. Das Dichtungsband weist eine Breite von 1,2 cm auf, eine Schichtdicke der Funktionsschicht von 10 µm und eine Dicke der Gewebeschicht im unbelasteten Zustand von 380 µm.

Acht Probestücke derselben (jeweils aus Rohrelement und Rohrschraubverbindung) werden mit Druckluft bei einem Druck von 4,4 bar und einer Temperatur von 23 °C 10 min lang unter Wasser auf Dichtheit geprüft und in dieser Zeit keine Luftblasen festgestellt.

Acht weitere Probestücke werden in einem Wärmeschrank eine Stunde auf 100 °C erhitzt. Nachdem sich ein Temperaturgleichgewicht eingestellt hat, werden die Probestücke mit einem Prüfdruck von 1,1 bar (Druckluft) im Wärmeschrank beaufschlagt. Anschließend werden sie im Wärmeschrank bei geöffneter Tür eine Stunde lang auf Raumtemperatur abgekühlt. Nach sechsmaliger Wiederholung der Vorgangs des Erhitzens und Abkühlens kann bei einem Druck von 1,1 bar keine Undichtigkeit der Dichtung festgestellt werden.

Acht weitere Probestücke werden mit Kaltwasser von einer Temperatur von 5 °C beschickt. Anschließend erfolgt das Einleiten von Warmwasser mit einer Temperatur von 90 °C. Auch hierbei sind Undichtigkeiten der Dichtung bzw. der Rohrschraubverbindung nicht festzustellen. Schließlich erfolgt die Überprüfung der Beständigkeit gegenüber Heißwasser. Dabei werden acht Probestücke mit 200 ml gefühlt und die Rohrstücke verschlossen. Die acht Probestücke werden mit Wasser gefüllt und die Rohrenden verschlossen. Die Probestücke werden 72 Stunden lang in einem Wärmeschrank bei 130 °C waagrecht gelagert. Nach Abkühlen des Wärmeschranks werden die Probestücke entnommen, die Stopfen bei Raumtemperatur entfernt und die Wasserdichtheit bei 23 °C und einem Prüfdruck von 25 bar geprüft. Während der ersten 10 Minuten tritt bei den Probestücken kein Wasser hinaus.

In einem weiteren Versuch werden die Enden von Rohrschraubverbindungsstücken mit dem erfindungsmäßen Dichtungsband einmalig umwickelt und in die Innengewinde der Rohrleitungen von herkömmlichen Spinnpumpenblöcken (Erspinnen von Chemiefasern im Extrusionsverfahren) eingedreht. Die Rohrschraubverbindungen werden einem Druck von 1000 bar bei Raumtemperatur 1 Tag lang ausgesetzt. Dabei treten keine Undichtigkeiten auf.

Auch Rohrschraubverbindungen eines herkömmlichen Heißdampferhitzers, welche mit dem erfindungsgemäßen Dichtungsband einmalig umwickelte Rohrstücke aufweisen, bleiben dicht, obgleich diese einem dauernden Temperaturwechsel um 130 °C und einem Druckunterschied von 2,2 bar 14 Tage lang ausgesetzt sind.

## Patentansprüche

1. Dichtungsband, geeignet zum Umwickeln von Rohrenden, vorzugsweise von Rohrgewinden, und Abdichten von Gewindeverbindungen, Verschraubungen und Rohrverbindungen, welches eine wasserdichte Funktionsschicht, vorzugsweise mit einer oder mehreren Grundschichten, aufweist, dadurch gekennzeichnet, daß die Funktionsschicht Polymere auf Polyetherestergrundlage, Polyetheramidgrundlage und / oder Polyurethangrundlage enthält.

2. Dichtungsband nach Anspruch 1, dadurch gekennzeichnet, daß mindestens eine Grundschicht auf mindestens einer Seite der Funktionsschicht angeordnet ist.

3. Dichtungsband nach Anspruch 2, dadurch gekennzeichnet, daß die Grundschicht porös ist.

4. Dichtungsband nach Anspruch 2 oder 3, dadurch gekennzeichnet, daß die Grundschicht ein Vlies, Filz, Wirkware und / oder Gewebe ist.

5. Dichtungsband nach Anspruch 4, dadurch gekennzeichnet, daß das Vlies, Filz, Wirkware und/oder Gewebe Naturfasern und/ oder Chemiefasern enthält.

6. Dichtungsband nach Anspruch 5, dadurch gekennzeichnet, daß die Naturfasern Baumwolle, Leinen, Jute, Hanf und/oder Sisal aufweisen.

7. Dichtungsband nach Anspruch 5 oder 6, dadurch gekennzeichnet, daß die Chemiefasern synthetische Fasern und/oder regenerierte und / oder modifizierte Cellulose-Fasern aufweisen.

8. Dichtungsband nach Anspruch 7, dadurch gekennzeichnet, daß die synthetischen Fasern mindestens einen Vertreter der Polyester-, Polyamid-, Polyacryl-, Polyvinylchloridfasern und Mischungen derselben umfassenden Gruppe enthalten.

9. Dichtungsband nach einem der Ansprüche 4 bis 8, dadurch gekennzeichnet, daß das Vlies, Filz, Wirkware oder Gewebe ein Flächengewicht von 5 bis 200 g / m2, vorzugsweise von 10 bis 100 g / m2, aufweist.

10. Dichtungsband nach einem der Ansprüche 1 bis 9, dadurch gekennzeichnet, daß die Funktionsschicht mit der Grundschicht punkt-, gitter- und / oder streifenförmig verklebt ist.

11. Dichtungsband nach einem der Ansprüche 1 bis 10, dadurch gekennzeichnet, daß die Funktionsschicht mit der Grundschicht adhäsiv verbunden ist.

12. Dichtungsband nach einem der Ansprüche 1 bis 11, dadurch gekennzeichnet, daß die Schichtdicke der Funktionsschicht derart bemessen ist, daß unter Druckbelastung die Funktionsschicht von den Zwischenräumen des Vlieses, Filzes, Wirkware und / oder Gewebes nicht vollständig aufgenommen ist.

13. Dichtungsband nach einem der Ansprüche 1 bis 12, dadurch gekennzeichnet, daß die Funktionsschicht im unbelasteten Zustand eine Schichtdicke von 5 bis 200 µm, vorzugsweise 10 bis 100 µm, aufweist.

14. Dichtungsband nach einem der Ansprüche 1 bis 13, dadurch gekennzeichnet, daß die Polymere Copolyetherester sind, die sich von längerkettigen Polyglykolen, kurzkettigen Glykolen mit 2 bis 4 Kohlenstoffatomen und Dicarbonsäuren ableiten.

15. Dichtungsband nach Anspruch 14, dadurch gekennzeichnet, daß die Polymere Copolyetherester sind, die aus einer Vielzahl von wiederkehrenden intralinearen langkettigen und kurzkettigen Estereinheiten bestehen, die statistisch über Esterbindungen Kopf an Schwanz verknüpft sind, wobei die langkettigen Estereinheiten der Formel 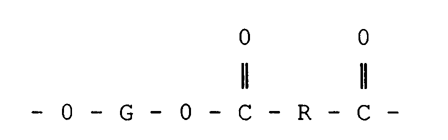 und die kurzkettigen Estereinheiten der Formel 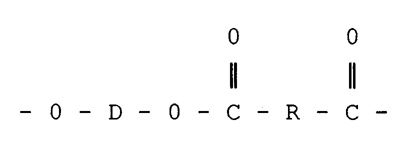 entsprechen, worin G einen zweiwertigen Rest darstellt, der nach der Entfernung von endständigen Hydroxylgruppen aus mindestens einem langkettigen Glykol eines mittleren Molekulargewichts von 600 bis 6 000 und eines Atomverhältnisses von Kohlenstoff zu Sauerstoff zwischen 2,0 und 4,3 zurückbleibt, wobei mindestens 20 Gew.% des langkettigen Glykols ein Atomverhältnis von Kohlenstoff zu Sauerstoff zwischen 2,0 und 2,4 besitzen und 15 bis 50 Gew.% des Copolyetheresters ausmachen, R einen zweiwertigen Rest darstellt, der nach der Entfernung von Carboxylgruppen aus mindestens einer Dicarbonsäure eines Molekulargewichts von weniger als 300 zurückbleibt, und D einen zweiwertigen Rest darstellt, der nach der Entfernung von Hydroxylgruppen aus mindestens einem Diol eines Molekulargewichts von weniger als 250 zurückbleibt, wobei mindestens 80 Mol % der verwendeten Dicarbonsäure aus Terephthalsäure oder ihren esterbildenden Äquivalenten und zumindest 80 Mol % des Diols mit dem kleinen Molekulargewicht aus 1,4-Butandiol oder dessen esterbildenden Äquivalenten bestehen, die Summe der Molprozente der Dicarbonsäure, die keine Terephthalsäure oder deren esterbildenden Äquivalente darstellt, und des Diols mit einem kleinen Molekulargewicht, das kein 1,4-Butandiol oder dessen esterbildenden Äquivalente darstellt, höchstens 20% beträgt und die kurzkettigen Estereinheiten 40 - 80 Gew.% des Copolyetheresters betragen.

16. Dichtungsband nach Anspruch 15, dadurch gekennzeichnet, daß die Polymere ganz oder teilweise Copolyetherester sind, worin mindestens 70 Mol % der verwendeten Dicarbonsäure 2,6-Naphthalindicarbonsäure oder deren Ester bildenden Äquivalente sind und bei dem mindestens 70 Mol.% des verwendeten Diols mit einem kleinen Molekulargewicht 1,4-Butandiol oder dessen esterbildenden Äquivalente ist und die Summe der Molprozente der Dicarbonsäure, die keine 2,6-Naphthalindicarbonsäure oder deren Ester bildende Äquivalente ist und des Diols mit einem kleinen Molekulargewicht, das kein 1,4-Butandiol oder dessen Ester bildende Äquivalente ist, höchstens 30% beträgt und die Estereinheiten mit kurzen Ketten 35 bis 80 Gew.% des Copolyetheresters ausmachen.

17. Dichtungsband nach Anspruch 16, dadurch gekennzeichnet, daß die Polymere Copolyetherester sind, die aus einer Vielzahl von wiederkehrenden intralinearen langkettigen und kurzkettigen Estereinheiten bestehen, die statistisch über Esterbindungen Kopf an Schwanz verknüpft sind, wobei die langkettigen Estereinheiten der Formel 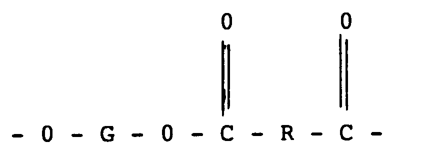 und die kurzkettigen Estereinheiten der Formel 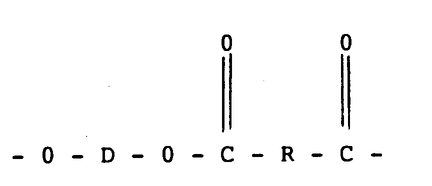 entsprechen, wobei G einen zweiwertigen Rest darstellt, der nach der Entfernung von endständigen Hydroxylgruppen aus mindestens einem langkettigen Glykol eines mittleren Molekulargewichts von 600 bis 4 000 und eines Atomverhältnisses von Kohlenstoff zu Sauerstoff zwischen 2 und 4,3 zurückbleibt, wobei mindestens 20 Gew.% des langkettigen Glykols ein Atomverhältnis von Kohlenstoff zu Sauerstoff zwischen 2,0 und 2,4 besitzen und 15 bis 50 Gew.% des Copolyetheresters ausmachen, R einen zweiwertigen Rest darstellt, der nach der Entfernung von Carboxylgruppen aus mindestens einer Dicarbonsäure eines Molekulargewichts von weniger als 300 zurückbleibt und D einen zweiwertigen Rest darstellt, der nach der Entfernung von Hydroxylgruppen aus mindestens einem Diol eines Molekulargewichts von weniger als 250 zurückbleibt, wobei mindestens 70 Mol % der verwendeten Dicarbonsäure aus 2,6-Naphthalindicarbonsäure oder ihrer esterbildenden Äquivalente besteht und mindestens 70 Mol % des Diols mit dem kleinen Molekulargewicht aus 1,4 Butandiol oder dessen esterbildenden Äquivalenten besteht und die Summe der Mol % von der Dicarbonsäure, die keine 2,6-Naphthalindicarbonsäure oder ihrer esterbildenden Äquivalente ist und des Diols mit einem kleinen Molekulargewicht, das kein 1,4-Butandiol oder dessen esterbildende Äquivalente ist, höchstens 30 % beträgt und die Estereinheiten mit kurzen Ketten 35 bis 80 Gew.% des Copolyetheresters betragen.

18. Dichtungsband nach einem der Ansprüche 1 bis 17, dadurch gekennzeichnet, daß die Grundschicht ein Haftmittel enthält.

19. Dichtungsband nach Anspruch 18, dadurch gekennzeichnet, daß das Haftmittel ein die Haftung förderndes und / oder die Haftung verleihendes Mittel ist.

20. Dichtungsband nach Anspruch 19, dadurch gekennzeichnet, daß das die Haftung fördernde Mittel ein pastöses Dichtmittel ist.

21. Dichtungsband nach Anspruch 19 oder 20, dadurch gekennzeichnet, daß das die Haftung fördernde und / oder die Haftung verleihende Mittel Mineralöle und / oder Esteröle sind.

22. Verwendung des Dichtungsbands nach einem der Ansprüche 1 bis 21 bei Rohrschraubverbindungen zum Umwickeln von Rohrgewinden der Gewinderohre und Abdichten der Rohrschraubverbindungen.

23. Verwendung des Dichtungsbands nach Anspruch 22 bei Fittings.

24. Verwendung des Dichtungsbands nach einem der Ansprüche 1 bis 21 bei Rohrsteckverbindungen zum Umwickeln von Rohrenden und Abdichten der Rohrsteckverbindungen.

25. Verwendung des Dichtungsbands nach einem der Ansprüche 22 bis 24 bei Heizungs-, Brauchwasser-, Trinkwasser-, Wasserdampf-, Gas-, Preßluftrohren, Industriearmaturen und Armaturen der Haustechnik.

26. Verwendung des Dichtungsbands nach Anspruch 25, dadurch gekennzeichnet, daß die Heizungs-, Brauchwasser-, Trinkwasser-, Wasserdampf-, Gas- und Preßluftrohre aus Eisen-Gußwerkstoffen, vorzugsweise Gußeisen mit Lamellengraphit, Weißer Temperguß, Schwarzer Temperguß und Stahlguß, oder aus thermoplastischen Kunststoffen hergestellt werden.

27. Verwendung des Dichtungsbandes nach Anspruch 25 bei Fittings, Armaturen, Rohrleitungen u.dgl. für technische Gase, insbesondere Flüssiggase wie Propan und Butan.

28. Verwendung des Dichtungsbandes nach Anspruch 25 bei Fittings, Armaturen, Rohrleitungen u.dgl. für Heizöl.

29. Dichtungsband nach Anspruch 4 und 7, dadurch gekennzeichnet, daß die Fasern Mikrofasern enthalten.

30. Dichtungsband nach Anspruch 1, gekennzeichnet durch eine wasserdichge Funktionsschicht und ein auf die Funktionsschicht aufgebrachtes Haftmittel.

31. Dichtungsband nach Anspruch 1 oder 30, gekennzeichnet durch ein beidseitig aufgebrachtes Haftmittel.

## Claims

1. Sealing tape suitable for winding around pipe ends, preferably pipe threads, and for sealing threaded joints, screw fittings and pipe joints, which has a waterproof functional layer, preferably with one or more base layers, characterized in that the functional layer contains polymers on polyetherester basis, polyetheramide basis and/or polyurethane basis.

2. Sealing tape in accordance with Claim 1, characterized in that at least one base layer is arranged on at least one side of the functional layer.

3. Sealing tape in accordance with Claim 2, characterized in that the base layer is porous.

4. Sealing tape in accordance with Claim 2 or 3, characterized in that the base layer is a nonwoven, felt, knitted fabric and/or woven fabric.

5. Sealing tape in accordance with Claim 4, characterized in that the nonwoven, felt, knitted fabric and/or woven fabric contains natural fibers and/or chemical fibers.

6. Sealing tape in accordance with Claim 5, characterized in that the natural fibers comprise cotton, linen, jute, hemp and/or sisal.

7. Sealing tape in accordance with Claim 5 or 6, characterized in that the chemical fibers comprise synthetic fibers and/or regenerated and/or modified cellulose fibers.

8. Sealing tape in accordance with Claim 7, characterized in that the synthetic fibers contain at least one representative of the group comprising polyester, polyamide, polyacrylic, polyvinylchloride fibers and mixtures of these.

9. Sealing tape in accordance with one of Claims 4 to 8, characterized in that the nonwoven, felt, knitted fabric or woven fabric has a weight per unit area of 5 to 200 g/m², preferably 10 to 100 g/m².

10. Sealing tape in accordance with one of Claims 1 to 9, characterized in that the functional layer is glued to the base layer in spots, in a grid pattern and/or in strips.

11. Sealing tape in accordance with one of Claims 1 to 10, characterized in that the functional layer is joined to the base layer by adhesion.

12. Sealing tape in accordance with one of Claims 1 to 11, characterized in that the thickness of the functional layer is such that under compression the functional layer is not completely incorporated into the interstices of the nonwoven, felt, knitted fabric and/or woven fabric.

13. Sealing tape in accordance with one of Claims 1 to 12, characterized in that the functional layer has a thickness of 5 to 200 µm, preferably 10 to 100 µm when unstressed.

14. Sealing tape in accordance with one of Claims 1 to 13, characterized in that the polymers are copolyether esters that are derived from longer-chain polyglycols, short-chain glycols with 2 to 4 carbon atoms, and dicarboxylic acids.

15. Sealing tape in accordance with Claim 14, characterized in that the polymers are copolyether esters comprising a large number of recurring intralinear long-chain and short-chain ester units that are randomly linked head to tail through ester bonds, where the long-chain ester units correspond to the formula 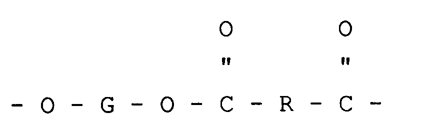 and the short-chain ester units correspond to the formula 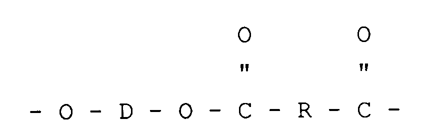 where G represents a divalent residue remaining after terminal hydroxyl groups are removed from at least one long-chain glycol with a mean molecular weight of 600 to 6000 and an atomic carbon-to-oxygen ratio of between 2.0 and 4.3, where at least 20% by weight of the long-chain glycol has an atomic carbon-to-oxygen ratio between 2.0 and 2.4 and makes up 15 to 50% by weight of the copolyether ester, R represents a divalent residue remaining after the removal of carboxyl groups from at least one dicarboxylic acid having a molecular weight of less than 300, and D represents a divalent residue remaining after the removal of hydroxyl groups from at least one diol having a molecular weight of less than 250, where at least 80 mole percent of the dicarboxylic acid used consists of terephthalic acid or its ester-forming equivalents and at least 80 mole percent of the diol with the low molecular weight consists of 1,4-butanediol or its ester-forming equivalents, the sum of the mole percents of the dicarboxylic acid other than terephthalic acid or its ester-forming equivalents and the diol with the low molecular weight other than 1,4-butanediol or its ester-forming equivalents is no more than 20%, and the short-chain ester units make up 40-80% by weight of the copolyether ester.

16. Sealing tape in accordance with Claim 15, characterized in that the polymers are wholly or partly copolyether esters in which at least 70 mole percent of the dicarboxylic acid used is 2,6-naphthalenedicarboxylic acid or its ester-forming equivalents and in which at least 70 mole percent of the diol used with a low molecular weight is 1,4-butanediol or its ester-forming equivalents, and the sum of the mole percents of the dicarboxylic acid other than 2,6-naphthalenedicarboxylic acid or its ester-forming equivalents and of the diol with the low molecular weight other than 1,4-butanediol or its ester-forming equivalents is no more than 30%, and the ester units with short chains make up 35 to 80% by weight of the copolyether ester.

17. Sealing tape in accordance with Claim 16, characterized in that the polymers are copolyether esters which consist of a large number of recurring intralinear long-chain and short-chain ester units that are linked randomly head to tail by ester bonds, where the long-chain ester units correspond to the formula 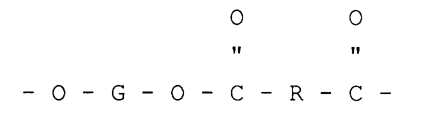 and the short-chain ester units correspond to the formula 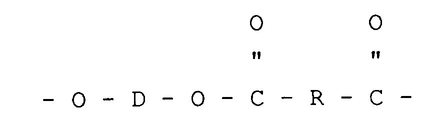 where G represents a divalent residue remaining after terminal hydroxyl groups are removed from at least one long-chain glycol with a mean molecular weight of 600 to 4000 and an atomic carbon-to-oxygen ratio of between 2 and 4.3, where at least 20% by weight of the long-chain glycol has an atomic carbon-to-oxygen ratio of between 2.0 and 2.4 and makes up 15 to 50% by weight of the copolyether ester, R represents a divalent residue remaining after the removal of carboxyl groups from at least one dicarboxylic acid with a molecular weight of less than 300, and D represents a divalent residue remaining after the removal of hydroxyl groups from at least one diol having a molecular weight of less than 250, where at least 70 mole percent of the dicarboxylic acid used consists of 2,6-naphthalenedicarboxylic acid or its ester-forming equivalents and at least 70 mole percent of the diol with the low molecular weight consists of 1,4-butanediol or its ester-forming equivalents, the sum of the mole percents of the dicarboxylic acid other than 2,6-naphthalenedi-carboxylic acid or its ester-forming equivalents and the diol with a low molecular weight other than 1,4-butanediol or its ester-forming equivalents is no more than 30%, and the short-chain ester units make up 35-80% by weight of the copolyether ester.

18. Sealing tape in accordance with one of Claims 1 to 17, characterized in that the base layer contains an adhesive.

19. Sealing tape in accordance with Claim 18, characterized in that the adhesive is an agent which promotes and/or provides adhesion.

20. Sealing tape in accordance with Claim 19, characterized in that the agent promoting adhesion is a paste-type sealant.

21. Sealing tape in accordance with Claim 19 or 20, characterized in that the agent promoting adhesion and/or providing adhesion consists of mineral oils and/or ester oils.

22. Use of the sealing tape in accordance with one of Claims 1 to 21 in screw joints to wind around threads of threaded pipes and to seal the screw joints.

23. Use of the sealing tape in accordance with Claim 22 with fittings.

24. Use of the sealing tape in accordance with one of Claims 1 to 21 in spigot pipe joints to wind around pipe ends and to seal the spigot joints.

25. Use of the sealing tape in accordance with one of Claims 22 to 24 in heating pipes, utility water pipes, drinking water pipes, water vapor pipes, gas pipes, compressed air pipes, industrial valves and valves used in domestic installations.

26. Use of the sealing tape in accordance with Claim 25, characterized in that the heating pipes, utility water pipes, drinking water pipes, water vapor pipes, gas pipes and compressed air pipes are manufactured from cast iron materials, preferably cast iron with lamellar graphite, white malleable cast iron, all-black malleable iron and cast steel, or from thermoplastics.

27. Use of the sealing tape in accordance with Claim 25 with fittings, valves, pipelines etc. for industrial gases, especially liquid gases such as propane and butane.

28. Use of the sealing tape in accordance with Claim 25 with fittings, valves, pipelines etc. for heating oil.

29. Sealing tape in accordance with Claims 4 and 7, characterized in that the fibers contain microfibers.

30. Sealing tape in accordance with Claim 1, characterized by a waterproof functional layer and an adhesive applied to the functional layer.

31. Sealing tape in accordance with Claim 1 or 30, characterized by an adhesive applied on both sides.

## Revendications

1. Ruban d'étanchéité, convenant pour être enroulé sur des extrémités de tube, de préférence sur des filets de tube, et pour rendre étanches des raccords filetés, des raccords vissés et des raccords de tubes, qui présente une couche fonctionnelle étanche à l'eau, de préférence avec une ou plusieurs couches de base, caractérisé en ce que la couche fonctionnelle contient des polymères à base de polyétherester, de polyétheramide et/ou de polyuréthane.

2. Ruban d'étanchéité selon la revendication 1, caractérisé en ce qu'au moins une couche de base est disposée sur au moins un côté de la couche fonctionnelle.

3. Ruban d'étanchéité selon la revendication 2, caractérisé en ce que la couche de base est poreuse.

4. Ruban d'étanchéité selon la revendication 2 ou 3, caractérisé en ce que la couche de base est un non-tissé, un feutre, un tricot et/ou un tissu.

5. Ruban d'étanchéité selon la revendication 4, caractérisé en ce que le non-tissé, le feutre, le tricot et/ou le tissu comporte des fibres naturelles et/ou des fibres artificielles.

6. Ruban d'étanchéité selon la revendication 5, caractérisé en ce que les fibres naturelles sont du coton, du lin, du jute, du chanvre et/ou du sisal.

7. Ruban d'étanchéité selon la revendication 5 ou 6, caractérisé en ce que les fibres artificielles sont des fibres synthétiques et/ou des fibres de cellulose régénérée et/ou modifiée.

8. Ruban d'étanchéité selon la revendication 7, caractérisé en ce que les fibres synthétiques contiennent au moins un représentant du groupe comprenant les fibres de polyester, les fibres de polyamide, les fibres de polyacryle, les fibres de poly(chlorure de vinyle) et des mélanges de celles-ci.

9. Ruban d'étanchéité selon l'une des revendications 4 à 8, caractérisé en ce que le non-tissé, le feutre, le tricot ou le tissu présente une masse par unité de surface de 5 à 200 g/m², de préférence de 10 à 100 g/m².

10. Ruban d'étanchéité selon l'une des revendications 1 à 9, caractérisé en ce que la couche fonctionnelle est collée à la couche de base par points, en grille et/ou en bandes.

11. Ruban d'étanchéité selon l'une des revendications 1 à 10, caractérisé en ce que la couche fonctionnelle est reliée à la couche de base par adhérence.

12. Ruban d'étanchéité selon l'une des revendications 1 à 11, caractérisé en ce que l'épaisseur de la couche fonctionnelle est choisie de telle sorte que, sous une contrainte de compression, la couche fonctionnelle ne soit pas absorbée complètement dans les interstices du non-tissé, du feutre, du tricot et/ou du tissu.

13. Ruban d'étanchéité selon l'une des revendications 1 à 12, caractérisé en ce qu'à l'état non sollicité, la couche fonctionnelle présente une épaisseur de 5 à 200 µm, de préférence de 10 à 100 µm.

14. Ruban d'étanchéité selon l'une des revendications 1 à 13, caractérisé en ce que les polymères sont des copolyétheresters qui sont dérivés de polyglycols à longue chaîne, de glycols à chaîne courte comptant de 2 à 4 atomes de carbone et d'acides dicarboxyliques.

15. Ruban d'étanchéité selon la revendication 14, caractérisé en ce que les polymères sont des copolyétheresters qui sont constitués d'un grand nombre d'unités ester intralinéaires répétées à longue chaîne et à chaîne courte, qui sont réticulés statistiquement en tête-bêche par l'intermédiaire de liaisons ester, les unités ester à longue chaîne correspondant à la formule : 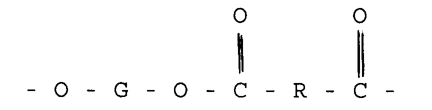 et les unités ester à chaîne courte correspondant à la formule : 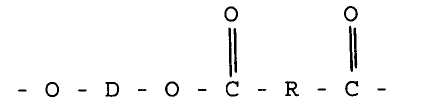 dans lesquelles G représente un résidu de valence deux qui reste après élimination des groupes hydroxyle terminaux d'au moins un glycol à longue chaîne d'une masse moléculaire moyenne de 600 à 6000 et dont le rapport atomique du carbone à l'oxygène est compris entre 2,0 et 4,3, tandis qu'au moins 20% en poids du glycol à longue chaîne présentent un rapport atomique du carbone à l'oxygène compris entre 2,0 et 2,4 et constituent de 15 à 50% en poids du copolyétherester, R représente un résidu de valence deux qui reste après l'élimination des groupes carboxyle d'au moins un acide dicarboxylique d'une masse moléculaire inférieure à 300, et D représente un résidu de valence deux qui reste après l'élimination des groupes hydroxyle d'au moins un diol d'une masse moléculaire inférieure à 250, tandis qu'au moins 80% en moles des acides dicarboxyliques utilisés sont constitués d'acide téréphtalique ou de ses équivalents formant des esters, et au moins 80% en moles du diol de faible masse moléculaire sont constitués de 1,4-butanediol ou de ses équivalents formant des esters, la somme des pourcentages en moles de l'acide dicarboxylique qui n'est pas l'acide téréphtalique ou ses équivalents formant des esters et du diol de faible masse moléculaire qui n'est pas le 1,4-butanediol ou ses équivalents formant des esters vaut au plus 20%, et les unités ester à chaîne courte représentent 40 - 80% en poids du copolyétherester.

16. Ruban d'étanchéité selon la revendication 15, caractérisé en ce que les polymères sont en tout ou en partie des copolyétheresters dans lesquels au moins 70% en moles de l'acide dicarboxylique utilisé sont l'acide 2,6-naphtalènedicarboxylique ou ses équivalents formant des esters, et dans lequel au moins 70% en moles du diol de faible masse moléculaire utilisé est le 1,4-butanediol ou ses équivalents formant des esters, et la somme des pourcentages en moles de l'acide dicarboxylique qui n'est pas l'acide 2,6-naphtalènedicarboxylique ou ses équivalents formant des esters et du diol de faible masse moléculaire qui n'est pas le 1,4-butanediol ou ses équivalents formant des esters vaut au plus 30%, et les unités ester à chaîne courte constituent de 35 à 80% en poids du copolyétherester.

17. Ruban d'étanchéité selon la revendication 16, caractérisé en ce que les polymères sont des copolyétheresters qui sont constitués d'un grand nombre d'unités intralinéaires répétées d'ester à longue chaîne et d'ester à chaîne courte, qui sont réticulés statistiquement en tête-bêche par l'intermédiaire de liaisons ester, les unités ester à longue chaîne correspondant à la formule : 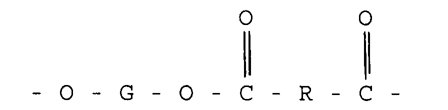 et les unités ester à chaîne courte correspondant à la formule : 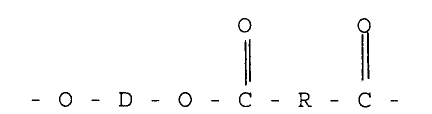 dans lesquelles G représente un résidu de valence deux qui reste après élimination des groupes hydroxyle terminaux d'au moins un glycol à longue chaîne d'une masse moléculaire moyenne de 600 à 4000 et dont le rapport atomique du carbone à l'oxygène est compris entre 2 et 4,3, tandis qu'au moins 20% en poids du glycol à longue chaîne présentent un rapport atomique du carbone à l'oxygène compris entre 2,0 et 2,4 et constituent de 15 à 50% en poids du copolyétherester, R représente un résidu de valence deux qui reste après l'élimination des groupes carboxyle d'au moins un acide dicarboxylique d'une masse moléculaire inférieure à 300, et D représente un résidu de valence deux qui reste après l'élimination des groupes hydroxyle d'au moins un diol d'une masse moléculaire inférieure à 250, tandis qu'au moins 70% en moles des acides dicarboxyliques utilisés sont constitués d'acide 2,6-naphtalènedicarboxylique ou de ses équivalents formant des esters, et au moins 70% en moles du diol de faible masse moléculaire sont constitués de 1,4-butanediol ou de ses équivalents formant des esters, la somme des pourcentages en moles de l'acide dicarboxylique qui n'est pas l'acide 2,6-naphtalènedicarboxylique ou ses équivalents formant des esters et du diol de faible masse moléculaire qui n'est pas le 1,4-butanediol ou ses équivalents formant des esters vaut au plus 30%, et les unités ester à chaîne courte représentent de 35 à 80% en poids du copolyétherester.

18. Ruban d'étanchéité selon l'une des revendications 1 à 17, caractérisé en ce que la couche de base contient un agent d'adhérence.

19. Ruban d'étanchéité selon la revendication 18, caractérisée en ce que l'agent d'adhérence est un agent favorisant l'adhérence et/ou un agent conférant une adhérence.

20. Ruban d'étanchéité selon la revendication 19, caractérisé en ce que l'agent favorisant l'adhérence est un l'agent d'étanchéité pâteux.

21. Ruban d'étanchéité selon la revendication 19 ou 20, caractérisé en ce que l'agent favorisant l'adhérence et/ou l'agent conférant une adhérence sont des huiles minérales et/ou des huiles estérifiées.

22. Utilisation du ruban d'étanchéité selon l'une des revendications 1 à 21 sur des raccords vissés de tubes, pour enroulement sur des filets des tubes filetés, et pour rendre étanches les liaisons de tubes vissées.

23. Utilisation du ruban d'étanchéité selon la revendication 22 sur des raccords.

24. Utilisation du ruban d'étanchéité selon l'une des revendications 1 à 21 sur des raccords de tubes à emboîtement, pour enroulement sur les extrémités de tubes et étanchéification des raccords de tubes à emboîtement.

25. Utilisation du ruban d'étanchéité selon l'une des revendications 22 à 24 sur des tubes de chauffage, à eau usée, à eau potable, à vapeur, à gaz, à air comprimé, sur de la robinetterie industrielles et de la robinetterie pour utilisation domestique.

26. Utilisation du ruban d'étanchéité selon la revendication 25, caractérisé en ce que les tubes de chauffage, à eau usée, à eau potable, à vapeur, à gaz et à air comprimé sont réalisés en matériau de fonte, de préférence en fonte à graphite lamellaire, en fonte malléable blanche, en fonte grise et en acier, ou en matière synthétique thermoplastique.

27. Utilisation du ruban d'étanchéité selon la revendication 25 sur des raccords, robinetterie, conduites et similaires pour gaz techniques, et en particulier pour gaz liquéfiés tel que le propane et le butane.

28. Utilisation du ruban d'étanchéité selon la revendication 25 pour des raccords, accessoires, conduites et similaires pour fioul de chauffage.

29. Ruban d'étanchéité selon les revendications 4 et 7, caractérisé en ce que les fibres contiennent des microfibres.

30. Ruban d'étanchéité selon la revendication 1, caractérisé par une couche fonctionnelle étanche à l'eau et un agent d'adhérence appliqué sur la couche fonctionnelle.

31. Ruban d'étanchéité selon la revendication 1 ou 30, caractérisé en ce qu'un agent d'adhérence est appliqué sur ses deux faces.
